**Europäisches Patentamt**

**European Patent Office**

**Office européen des brevets**

(19)

(11) Veröffentlichungsnummer : **0 324 331 B1**

(12)  # EUROPÄISCHE PATENTSCHRIFT

(45) Veröffentlichungstag der Patentschrift :
**13.05.92 Patentblatt 92/20**

(51) Int. Cl.$^5$ : **G01N 1/22**

(21) Anmeldenummer : **88890004.0**

(22) Anmeldetag : **11.01.88**

(54) **Vorrichtung zur kontinuierlichen Entnahme heisser Gasproben aus einem Reaktionsgefäss.**

(43) Veröffentlichungstag der Anmeldung :
**19.07.89 Patentblatt 89/29**

(45) Bekanntmachung des Hinweises auf die
Patenterteilung :
**13.05.92 Patentblatt 92/20**

(84) Benannte Vertragsstaaten :
**AT BE CH DE ES FR GB IT LI**

(56) Entgegenhaltungen :
**EP-A- 0 095 802**
**EP-A- 0 219 188**
**EP-A- 0 243 569**
**DE-A- 2 301 264**
**FR-A- 2 363 792**
**US-A- 3 748 906**

(73) Patentinhaber : **VOEST-ALPINE**
**INDUSTRIEANLAGENBAU GESELLSCHAFT**
**m.b.H.**
**Turmstrasse 44**
**A-4020 Linz (AT)**

(72) Erfinder : **Hölzl, Kurt**
**Wart 35**
**A-4152 Sarleinsbach (AT)**

(74) Vertreter : **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz (AT)**

**Beschreibung**

Die Erfindung bezieht sich auf eine Vorrichtung zur kontinuierlichen Entnahme heißer Gasproben aus einem Reaktionsgefäß mit zwei aus je einem beheizten Innenrohr und aus einem gegenüber dem Innenrohr wärmeisolierten, gekühlten Außenmantel bestehenden Entnahmesonden, denen je ein einen Filtertopf mit einer lösbar eingesetzten Filterkerze aufweisendes Filter nachgeordnet ist.

Zur Steuerung eines Reaktionsablaufes in Abhängigkeit von der Zusammensetzung der bei diesem Reaktionsablauf entstehenden Gase ist eine Entnahme von Gasproben erforderlich. Da das Abziehen der Gasproben über eine Entnahmesonde eine kontinuierliche Probenentnahme ausschließt, weil insbesondere bei staubbeladenen Heißgasen die Entnahmesonde mit dem nachgeordneten Filter zum Abscheiden der Feststoffe in mehr oder weniger regelmäßigen Abständen gewartet werden muß, wurde bereits der Einsatz von zwei parallelgeschalteten Entnahmesonden vorgeschlagen (EP-A-0 243 569), über die abwechselnd die Gasproben dem Reaktionsgefäß entnommen werden, so daß an der jeweils nicht der Probenentnahme dienenden Entnahmesonde die erforderlichen Wartungsarbeiten durchgeführt werden können. Zur Verringerung des Wartungsaufwandes wird dabei vorteilhaft eine den Analysenbedarf übersteigende Gasmenge aus dem Reaktionsgefäß abgezogen, um mit der Überschußmenge die jeweils andere Sonde gegensinnig zur Entnahmerichtung zu durchblasen und dadurch zu reinigen. Obwohl durch diese Maßnahmen tatsächlich ein kontinuierlicher Gas analysenbetrieb aufrecht erhalten werden kann, bleiben die Wartungsanforderungen vergleichsweise hoch. Der in den den Entnahmesonden nachgeschalteten Filtern zurückgehaltene Staub muß nämlich trotz des regelmäßigen Durchblasens der Filter gegensinnig zur Entnahmerichtung von Hand aus aus den Filtertöpfen entfernt werden, weil sich aufgrund der mehrfachen Umlenkung der Blasströme Toträume ergeben, in denen sich der Staub ablagern kann. Außerdem ist mit dem Einsatz von zwei Entnahmesonden für die Gasproben ein erheblicher Mehraufwand für den Sondenanschluß am Reaktionsgefäß verbunden. Werden zwei Entnahmesonden für die Gasproben in einem gemeinsamen Gehäuse zusammengefaßt (FR-A2 363 792), das an das Reaktionsgefäß angeschlossen wird, so kann zwar dieser Mehraufwand für den Sondenanschluß vermieden werden, doch bleiben die Schwierigkeiten hinsichtlich der Filterentstaubung bestehen.

Bei einer Entnahmesonde für heiße Gasproben ist es außerdem bekannt (EP-A 219 188), den Filtertopf als koaxiale, im Durchmesser erweiterte Verlängerung der Entnahmesonde auszubilden. In die in diese Verlängerung eingesetzte Filterkerze ragt ein Rohrstutzen, durch den einerseits die Gasprobe abgezogen und andererseits Druckluft zur Filterreinigung geblasen werden kann. Abgesehen davon, daß das Sondengehäuse lediglich auf eine Temperatur oberhalb des Taupunktes des Probengases gekühlt werden darf, kann trotz des koaxial zur Entnahmesonde verlaufenden, der Druckluftführung zur Filterreinigung dienenden Rohrstutzens keine ausreichende Filterreinigung erreicht werden, weil die gegen die vordere Stirnfläche der Filterkerze gerichtete Druckluftströmung keine vollständige Staubentleerung des den Rohrstutzen umschließenden Ringraumes zwischen der Filterkerze und dem Filtertopf zuläßt.

Der Erfindung liegt somit die Aufgabe zugrunde, eine Vorrichtung zur kontiunierlichen Entnahme heißer Gasproben aus einem Reaktionsgefäß der eingangs geschilderten Art mit einfachen Mitteln so zu verbessern, daß einerseits der Mehraufwand für den Sondenanschluß an das Reaktionsgefäß vermieden und andererseits die Wartung für die Filterreinigung entscheidend verringert werden kann.

Die Erfindung löst die gestellte Aufgabe dadurch, daß die beiden nebeneinandergereihten Entnahmesonden zu einer an das Reaktionsgefäß anschließbaren Baueinheit verbunden sind, die die beiden zumindest im wesentlichen achsparallelen Filter in Verlängerung der zugehörigen Entnahmesonden umfaßt, und daß die beiden Filter je einen die Filterkerze tragenden, an den Filtertopf anflanschbaren Filterboden aufweisen, der in den Ringraum zwischen dem Filtertopf und der Filterkerze mündende, an eine Blasleitung anschließbare Blasdüsen bildet.

Die an sich bekannte Verbindung der beiden Entnahmesonden zu einer Baueinheit bringt zunächst den Vorteil einer Verringerung des Sondenanschlußaufwandes mit sich. Dazu kommt, daß durch die Anordnung der beiden Filter in Verlängerung der zugehörigen Entnahmesonden eine weitgehend geradlinige Blasstrecke für die Filterreinigung sichergestellt wird, so daß mit dem gegensinnigen Durchblasen der Filter und der Entnahmesonden mit der Überschußmenge der durch die jeweils andere Entnahmesonde abgezogenen Gasprobe die angestrebte Reinigung der Filter und der Entnahmesonden tatsächlich erreicht wird, zumal die beiden Filter mit Blasdüsen versehen sind, die in den Ringraum zwischen Filtertopf und Filterkerze münden. Über diese Blasdüsen wird erst eine achsparallele Blasströmung innerhalb des Ringraumes zwischen Filtertopf und Filterkerze und damit eine vollständige Reinigung des Filtertopfes von den zurückgehaltenen Feststoffmengen erzwungen. Mit einer solchen Blasströmung wird nicht nur eine Blasstromumlenkung, sondern auch ein damit verbundener Druckabfall vermieden.

Damit ein über den Querschnitt des Ringraumes zwischen dem Filtertopf und der Filterkerze gleichmäßig verteilter Blasstrom innerhalb des Filtertopfes erzeugt werden kann, können die Blasdüsen in einfacher Weise

2

EP 0 324 331 B1

aus mit einem Ringkanal verbundenen Blasöffnungen im Filterboden bestehen. Der Ringkanal bildet dabei eine Verteilerleitung, die an die Blasleitung angeschlossen wird.

Die beiden Entnahmesonden könnten jeweils mit einem gekühlten Außenmantel versehen sein, um der Temperaturbelastung durch die heißen Gase im Reaktionsgefäß Rechnung zu tragen. Einfachere Verhältnisse ergeben sich allerdings in weiterer Ausbildung der Erfindung dadurch, daß die beheizten Innenrohre der beiden Entnahmesonden von einem gemeinsamen, gekühlten Außenmantel umschlossen werden. Durch die gesonderte Heizung für die beiden Innenrohre kann vorteilhaft sichergestellt werden, daß keine Taupunktunterschreitung im Bereich des jeweils der Probenentnahme dienenden Innenrohres auftreten kann. Die Wärmeisolierung zwischen den Innenrohren und dem gemeinsamen Außenmantel unterbindet dabei eine gegenseitige Einflußnahme zwischen der Mantelkühlung und der Innenrohrheizung. Außerdem wird durch den gemeinsamen Außenmantel eine kompakte Baueinheit für die beiden Entnahmesonden erzielt.

Wie die Innenrohre der Entnahmesonden können auch die in Verlängerung der Innenrohre vorgesehenen Filtertöpfe von einem gemeinsamen, wärmeisolierten Mantel umschlossen werden. Dieser Mantel kann in einfacher Weise Wärmeverluste für die Heizung der Filtertöpfe vermeiden helfen, die ja ebenfalls auf einen Temperaturbereich über dem Taupunkt erwärmt werden müssen, um eine Kondensatbildung und damit eine Schlammbildung zu vermeiden.

Die Zusammenfassung von zwei Entnahmesonden zu einer Baueinheit bildet außerdem eine vorteilhafte Vorausserzung für die Anordnung eines Temperaturfühlers zum Erfassen der Gastemperatur innerhalb des Reaktionsgefäßes. Zu diesem Zweck braucht lediglich zwischen den beiden Entnahmesonden ein in das Reaktionsgefäß ragender Temperaturfühler vorgesehen zu werden, der die Gastemperatur im Bereich der Einströmöffnungen beider Entnahmesonden erfaßt.

Insbesondere bei gerade auslaufenden Einströmöffnungen der Entnahmesonden kann die Gefahr bestehen, daß beim Ausblasen der einen Entnahmesonde die durch die andere Entnahmesonde abgezogenen Gasproben durch den Blasstrom verfälscht werden. Um dieser Gefahr zu begegnen, kann zwischen den Innenrohren der beiden Entnahmesonden an dem in das Reaktionsgefäß ragendem Ende wenigstens eine die einbzw. austretenden Gasströmungen voneinander trennende Leitwand vorgesehen sein. Besonders vorteilhafte Verhältnisse ergeben sich, wenn beiden Innenrohren je eine Leitwand zugeordnet wird, zwischen denen dann der Temperarurfühler in das Reaktionsgefäß ragen kann. Es braucht wohl nicht besonders hervorgehoben zu werden, daß auch die Leitwände oder die Halterung bzw. die Anschlüsse des Temperaturfühlers mit einer Kühlung versehen werden können, falls dies erforderlich ist.

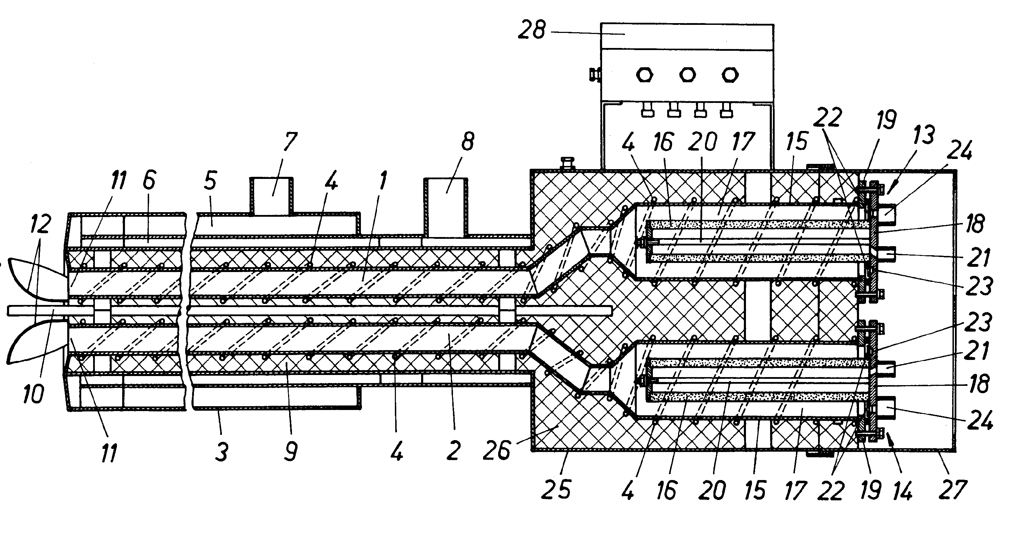

In der Zeichnung ist der Erfindungsgegenstand beispielsweise dargestellt, und zwar wird eine erfindungsgemäße Vorrichtung zur kontinuierlichen Entnahme heißer Gasproben aus einem Reaktionsgefäß in einem vereinfachten Axialschnitt gezeigt.

Die als Ausführungsbeispiel dargestellte Vorrichtung weist zwei parallel nebeneinander angeordnete Innenrohre 1 und 2 für die Gasentnahme auf, die von einem gemeinsamen Außenmantel 3 umschlossen werden und eine zwei Entnahmesonden ergebende Baueinheit bilden. Die beiden Innenrohre 1 und 2 sind jeweils mit einer Heizung versehen, die in Form eines elektrischen Heizleiters 4 um das jeweilige Innenrohr 1 bzw. 2 gewunden ist. Der Außenmantel 3 ist zumindest im Bereich der Einstecklänge in das Reaktionsgefäß doppelwandig ausgeführt, so daß sich im Bereich des Außenmantels 3 ein äußerer Ringraum 5 für die Kühlflüssigkeitszuführung und ein innerer Ringraum 6 für die Kühlflüssigkeitsabfuhr ergibt. Der Ringraum 5 wird demzufolge über einen Anschlußstutzen 7 an eine Zuleitung und der Ringraum 6 an eine Rückleitung 8 für die Kühlflüssigkeit, üblicherweise Wasser, angeschlossen. Zwischen dem Außemantel 3 und den beiden Innenrohren 1 und 2 ist eine Wärmeisolierung 9 vorgesehen, die eine gegenseitige Beeinflussung zwischen der Mantelkühlung und der Rohrheizung unterbindet.

Zwischen den beiden Innenrohren 1 und 2 verläuft ein in das Reaktionsgefäß vorragender Temperaturfühler 10, mit dessen Hilfe die Gastemperatur im Entnahmebereich des Reaktionsgefäßes gemessen werden kann. Die Einströmöffnungen 11 der beiden Innenrohre 1 und 2 sind gegeneinander durch zwei Leitwände 12 abgeschirmt, zwischen denen der Temperatur fühler 10 in das Reaktionsgefäß ragt.

In Verlängerung der beiden Innenrohre 1 und 2 sind an die beiden Entnahmesonden zwei achsparallele Filter 13 und 14 angeschlossen. Diese Filter 13 und 14, die zum Abscheiden des mit den entnommen Gasproben mitgeführten Staubes dienen, bestehen im wesentlichen aus je einem Filtertopf 15 und einer Filterkerze 16, die unter Freilassung eines Ringraumes 17 in den Filtertopf eingesetzt ist. Die Filterkerzen 16 werden dabei von Filterböden 18 getragen, die mit Anschlußflanschen 19 der Filtertöpfe 15 lösbar verschraubt sind. Die Befestigung der Filterkerzen 16, die den eigentlichen Filterkörper bilden, erfolgt gemäß dem Ausführungsbeispiel durch Spannschrauben 20. Die aus dem Reaktionsgefäß abgezogene Gasprobe wird jeweils durch die Filterkerze 16 gesaugt und über einen Gasleitungsanschluß 21 einem Analysengerät zugeführt.

Der Filterboden 18 der beiden Filter 14 bildet im Bereich des Ringraumes 17 Blasdüsen in Form von Blasöffnungen 22, die von einem Ringkanal 23 ausgehen und in den Ringraum 17 münden. Dieser Ringkanal 23

3

bildet eine mit einem Blasleitungsanschluß 24 versehene Verteilerleitung, so daß durch den Ringraum 17 der beiden Filter 14 ein Blasstrom entgegen der Gasentnahmerichtung erzeugt werden kann.

Wie aus der Zeichnung ersichtlich ist, sind auch die Filtertöpfe 15 mit dem Heizleiter 4 einer elektrischen Widerstandsheizung umwunden und von einem gemeinsamen Außenmantel 25 umschlossen, der mit einer Wärmeisolierung 26 ausgestattet ist. Durch diese Maßnahme kann mit einem vergleichsweise geringen Energieeinsatz eine Taupunktunterschreitung im Bereich der Filtertöpfe 15 wirksam unterbunden werden. Der Mantel 25 ist durch einen abnehmbaren Deckel 27 verschlossen, durch den die Blasleitungen und die weiterführenden Gasleitungen hindurchgeführt werden und der ebenfalls mit einer Wärmeisolierung versehen wird, was jedoch aus Übersichtlichkeitsgründen nicht dargestellt ist.

Die elektrische Versorgung der Heizungen, die Meßleitungen für die Temperaturüberwachung und allenfalls vorhandene Steueranschlüsse sind in einem Anschlußkasten 28 zusammengefaßt.

Um eine kontinuierliche Entnahme einer Gasprobe aus einem Reaktionsgefäß sicherzustellen, wird über eines der beiden Innenrohre die Gasprobe aus dem Reaktionsgefäß abgezogen. Wird hiefür beispielsweise das Innenrohr 1 eingesetzt, so wird das staubbeladene Gas durch das Innenrohr dem nachgeordneten Filter 13 zugeführt und durch die Filterkerze 16 abgesaugt, wobei die Feststoffteilchen im Ringraum 17 zwischen dem Filtertopf 15 und der Filterkerze 16 zurückgehalten werden. Gleichzeitig kann das dem anderen Innenrohr 2 nachgeschaltete Filter 14 gereinigt werden, und zwar vorzugsweise mit Hilfe einer Überschußmenge an dem durch das Innenrohr 1 abgezogenen Gases, das durch das Filter 14 und das Innenrohr 2 in das Reaktionsgefäß zurückgeblasen wird. Die Einleitung dieses Überschußgases in das Filter 14 erfolgt über den Blasleitungsanschluß 24, um den im Filtertopf 15 befindlichen Staub aus dem Filtertopf heraus und durch das Innenrohr 2 in das Reaktionsgefäß zurückzublasen. Die Anordnung des Filters 14 in Verlängerung des Innenrohres 2 stellt dabei einen im wesentlichen geraden Strömungsweg ohne die Reinigung beeinträchtigende Umlenkungen sicher, so daß für eine gute Reinigung gesorgt wird, ohne die Filterkerze 16 aus dem Filtertopf 15 entnehmen zu müssen. Die Filterkerze 16 selbst kann ebenfalls ausgeblasen werden, wenn Druckgas auch über den Gasleitungsanschluß 21 in das Filter 14 eingeleitet wird. Der staubbeladene Blasstrom durch das Innenrohr 2 kann die gleichzeitig durch das Innenrohr 1 aus dem Reaktionsgefäß abgezogene Gasprobe nicht verfälschen, weil durch die Leitwände 12 für eine entsprechende Trennung zwischen den ein- bzw. austretenden Gasströmungen gesorgt wird.

Wird durch die im Filtertopf 15 des Filters 13 zurückgehaltene Feststoffmenge die einwandfreie Funktion dieses Filters 13 beeinträchtigt, so wird die Gasentnahme vom Innenrohr 1 auf das Innenrohr 2 umgeschaltet und das Filter 13 gegensinnig zur Entnahmerichtung ausgeblasen, um für einen neuerlichen Einsatz bereit zu sein, wenn sich das Filter 14 zu verlegen beginnt. Durch diese abwechselnde Gasentnahme durch die beiden Innenrohre 1 und 2 kann somit eine kontinuierliche Gasanalyse für die Steuerung des Reaktionsablaufes im Reaktionsgefäß gewährleistet werden.

## Patentansprüche

1. Vorrichtung zur kontinuierlich Entnahme heißer Gas-proben aus einem Reaktionsgefäß mit zwei aus je einem beheizten Innenrohr (1, 2) und aus einem gegenüber dem Innenrohr (1, 2) wärmeisolierten, gekühlten Außenmantel (3) bestehenden Entnahmesonden, denen je ein einen Filtertopf (15) mit einer lösbar eingesetzten Filterkerze (16) aufweisendes Filter (13, 14) nachgeordnet ist, dadurch gekennzeichnet, daß die beiden nebeneinandergereihten Entnahmesonden zu einer an das Reaktionsgefäß anschließbaren Baueinheit verbunden sind, die die beiden zumindest im wesentlichen achsparallelen Filter (13, 14) in Verlängerung der zugehörigen Entnahmesonden umfaßt, und daß die beiden Filter (13, 14) je einen die Filterkerze (16) tragenden, an den Filtertopf (15) anflanschbaren Filterboden (18) aufweisen, der in den Ringraum (17) zwischen dem Filtertopf (15) und der Filterkerze (16) mündende, an eine Blasleitung anschließbare Blasdüsen bildet.

2. Vorrichtung nach Anspruch 1, dadurch gekennzeichnet, daß die Blasdüsen aus mit einem Ringkanal (23) verbundenen Blasöffnungen (22) im Filterboden (18) bestehen.

3. Vorrichtung nach Anspruch 1 oder 2, dadurch gekennzeichnet, daß die beheizten Innenrohre (1, 2) der beiden Entnahmesonden von einem gemeinsamen, gekühlten Außenmantel (3) umschlossen sind.

4. Vorrichtung nach einem der Ansprüche 1 - 3, dadurch gekennzeichnet, daß die beheizbaren Filtertöpfe (15) von einem gemeinsamen, wärmeisolierten Mantel (25) umschlossen sind.

5. Vorrichtung nach einem der Ansprüche 1 - 4, dadurch gekennzeichnet, daß zwischen den beiden Entnahmesonden ein in das Reaktionsgefäß ragender Temperaturfühler (10) vorgesehen ist.

6. Vorrichtung nach einem der Ansprüche 1 - 5, dadurch gekennzeichnet, daß zwischen den Innenrohren (1, 2) der beiden Entnahmesonden an dem in das Reaktionsgefäß ragenden Ende wenigstens eine die ein- bzw. austretenden Gasströmungen voneinander trennende Leitwand (12) vorgesehen ist.

## Claims

1. Apparatus for the continuous removal of hot gas samples from a reaction vessel comprising two removal probes each consisting of a heated inner tube (1, 2) and a cooled outer jacket (3) which is thermally insulated with respect to the inner tube (1, 2), each probe being followed by a filter (13, 14) comprising a filter pot (15) containing a filter candle (16) releasably inserted therein, characterised in that the two removal probes arranged side by side are combined to form a component which is adapted to be connected to the reaction vessel and which surrounds the two at least substantially axis-parallel filters (13, 14) in extension of the associated removal probes, and in that the two filters (13, 14) each comprise a filter base (18) which carries the filter candle (16), is adapted to be flanged on the filter pot (15), and forms blowing nozzles which lead into the annular space (17) between the filter pot (15) and the filter candle (16) and which are adapted to be connected to a blowing line.

2. Apparatus according to claim 1, characterised in that the blowing nozzles consist of blowing apertures (22) in the filter base (18), said apertures being connected to an annular duct (23).

3. Apparatus according to claim 1 or 2, characterised in that the heated inner tubes (1, 2) of the two removal probes are enclosed by a common cooled outer jacket (3).

4. Apparatus according to any one of claims 1 to 3, characterised in that the heatable filter pots (15) are enclosed by a common thermally insulated jacket (25).

5. Apparatus according to any one of claims 1 to 4, characterised in that a temperature sensor (10) projecting into the reaction vessel is provided between the two removal probes.

6. Apparatus according to any one of claims 1 to 5, characterised in that at least one baffle (12) separating the incoming and outgoing gas flows from one another is provided between the inner tubes (1, 2) of the two removal probes at the end projecting into the reaction vessel.

## Revendications

1. Dispositif pour prélever en continu des échantillons de gaz chauds dans une cuve de réaction, comprenant deux sondes de prélèvement, composées chacune d'un tube intérieur chauffé (1, 2) et d'une gaine extérieure refroidie (3), isolée thermiquement du tube intérieur (1, 2), en aval de chacune desquelles est placé un filtre (13, 14) présentant un pot de filtre (15) munie d'une bougie filtrante (16) montée amovible, caractérisé en ce que les deux sondes de prélèvement juxtaposées sont réunies en un module destiné à être raccordé à la cuve de réaction, sous-ensemble qui comprend les deux filtres (13, 14) qui sont au moins sensiblement disposés à axes parallèles, dans le prolongement des sondes de prélèvement correspondantes, et en ce que les deux filtres (13, 14) présentent chacun un fond de filtre (14) qui porte la bougie filtrante (16) et peut être fixé au pot de filtre (15) par un flasque, et qui forme des buses de soufflage, pouvant être raccordées à une conduite de soufflage, et débouchant dans la chambre annulaire (17) comprise entre le pot de filtre (15) et la bougie filtrante (16).

2. Dispositif selon la revendication 1, caractérisé en ce que les buses de soufflage sont composées d'ouvertures de soufflage (22) pratiquées dans le fond de filtre (18) et reliées à un canal annulaire (23).

3. Dispositif selon la revendication 1 ou 2, caractérisé en ce que les tubes intérieurs chauffés (1, 2) des deux sondes de prélèvement sont entourés d'une gaine extérieure commune refroidie (3).

4. Dispositif selon une des revendications 1 à 3, caractérisé en ce que les pots de filtre chauffé (15) sont entourés d'une gaine commune (25) isolée de la chaleur.

5. Dispositif selon une des revendications 1 à 4, caractérisé en ce qu'un capteur de température (10) qui pénètre dans la cuve de réaction est prévu entre les deux sondes de prélèvement.

6. Dispositif selon une des revendications 1 à 5, caractérisé en ce qu'au moins une paroi déflectrice (12) qui sépare l'un de l'autre les courants gazeux entrant et sortant est prévue entre les tubes intérieurs (1, 2) des deux sondes de prélèvement, à l'extrémité qui pénètre dans la cuve de réaction.

EP 0 324 331 B1